(19) Europäisches Patentamt
European Patent Office
Office européen des brevets

(11) **EP 4 711 807 A1**

(12) **EUROPEAN PATENT APPLICATION**

(43) Date of publication:
**18.03.2026 Bulletin 2026/12**

(21) Application number: **25188665.1**

(22) Date of filing: **10.07.2025**

(51) International Patent Classification (IPC):
**G01S 7/40** $^{(2006.01)}$   **G01S 7/41** $^{(2006.01)}$
**G01S 13/34** $^{(2006.01)}$   **G01S 13/88** $^{(2006.01)}$
**G01B 15/02** $^{(2006.01)}$

(52) Cooperative Patent Classification (CPC):
**G01S 7/41; G01B 15/02; G01S 7/4065;**
**G01S 7/4082; G01S 13/34; G01S 13/88;**
G01S 13/345

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **17.09.2024 JP 2024159837**

(71) Applicant: **Kabushiki Kaisha Toshiba**
**Tokyo 105-0023 (JP)**

(72) Inventors:
• **Mitsui, Yusuke**
**Minato-ku, Tokyo, 105-0023 (JP)**
• **Tsujimura, Kazuhiro**
**Minato-ku, Tokyo, 105-0023 (JP)**
• **Mori, Hiroki**
**Minato-ku, Tokyo, 105-0023 (JP)**
• **Yamaguchi, Keiichi**
**Minato-ku, Tokyo, 105-0023 (JP)**

(74) Representative: **Hoffmann Eitle**
**Patent- und Rechtsanwälte PartmbB**
**Arabellastraße 30**
**81925 München (DE)**

(54) **THICKNESS MEASUREMENT SYSTEM**

(57) According to one arrangement, a thickness measurement system includes a support base on which a measurement object is placed, a first antenna module, a second antenna module disposed opposite to the first antenna module in a first direction across the support base, and a signal generation module shared by the first antenna module and the second antenna module. Both the first antenna module and the second antenna module are configured to transmit a first signal based on a signal from the signal generation module to the measurement object and receive the first signal reflected by the measurement object. The support base, the first antenna module, and the second antenna module are installed such that a distance along the first direction between the support base and the first antenna module is different from a distance along the first direction between the support base and the second antenna module.

F I G. 1

**Description**

FIELD

The present disclosure relates to a thickness measurement system.

BACKGROUND

In general, in thickness measurement in a rolling line, accuracy on the order of several tens to several microns is required. In a conventional thickness measurement system, a measurement object is irradiated with X-rays or γ-rays which are transmitted therethrough to perform measurement. However, since there are problems in environmental robustness and cost, thickness measurement using an inexpensive and environmentally resistant millimeter wave radar has been studied.

As a thickness measurement system using a millimeter wave radar, a thickness measurement system has been devised in which two millimeter wave radars are installed so as to face each other vertically with a measurement object interposed therebetween, and these two millimeter wave radars are operated in synchronization to measure the thickness of the measurement object.

However, in such a thickness measurement system, a measurement result of the upper millimeter wave radar and a measurement result of the lower millimeter wave radar may not be able to be discriminated from each other under a predetermined condition, and there may be a problem that the thickness of the measurement object cannot be measured.

BRIEF DESCRIPTION OF THE DRAWINGS

FIG. 1 is a diagram illustrating a configuration example of a thickness measurement system according to a first arrangement.

FIG. 2 is a block diagram illustrating a configuration example of a thickness measurement system according to the arrangement.

FIG. 3 is a circuit diagram of a radar system in the block diagram of the thickness measurement system illustrated in FIG. 2.

FIG. 4 is a diagram for describing range bins in the arrangement.

FIG. 5 is a diagram for describing range bins in the arrangement.

FIG. 6 is a diagram illustrating a configuration example of a thickness measurement system according to a second arrangement.

FIG. 7 is a diagram illustrating a configuration example of a thickness measurement system according to the arrangement.

FIG. 8 is a block diagram illustrating a configuration example of a thickness measurement system according to the arrangement.

FIG. 9 is a diagram for describing a function of a range bin analysis module according to the arrangement.

DETAILED DESCRIPTION

According to one arrangement, a thickness measurement system includes a support base on which a measurement object is placed, a first antenna module, a second antenna module disposed opposite to the first antenna module in a first direction across the support base, and a signal generation module shared by the first antenna module and the second antenna module. Both the first antenna module and the second antenna module are configured to transmit a first signal based on a signal from the signal generation module to the measurement object and receive the first signal reflected by the measurement object. The support base, the first antenna module, and the second antenna module are installed such that a distance along the first direction between the support base and the first antenna module is different from a distance along the first direction between the support base and the second antenna module.

Hereinafter, arrangements will be described with reference to the drawings.

Note that the disclosure is merely an example, and the invention is not limited by the contents described in the following arrangements. Modifications easily conceivable by those skilled in the art are naturally included in the scope of the disclosure. In order to make the description clearer, in the drawings, the size, shape, and the like of each part may be schematically represented by being changed with respect to the actual arrangement. In the plurality of drawings, corresponding elements are denoted by the same reference numerals, and a detailed description thereof may be omitted.

(First Arrangement)

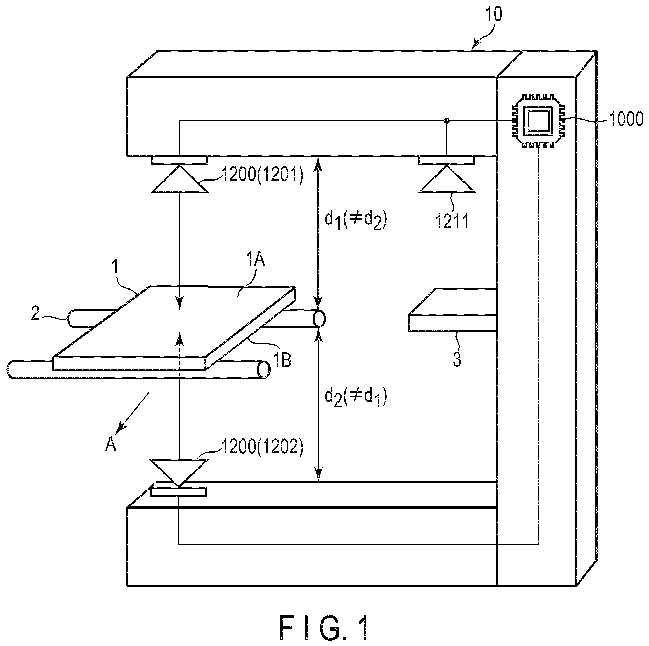

FIG. 1 is a diagram illustrating a configuration example of a thickness measurement system 10 according to a first arrangement. The thickness measurement system 10 (thickness measurement instrument) is a system that measures the thickness of the measurement object (thick plate) 1 with a millimeter wave radar.

The measurement object (thick plate) 1 is placed on a support base (conveyor line) 2 and is conveyed along direction A on the support base 2. The thickness measurement system 10 includes the support base 2, a reference target 3, a signal generation module 1000, two main antenna modules 1200 installed so as to face each other in the vertical direction (first direction) across the support base 2 (measurement object 1), and a reference antenna module 1211.

Hereinafter, out of the two main antenna modules 1200, a main antenna module 1200 installed at the position facing an upper surface 1A of the measurement object 1 is referred to as "upper main antenna module 1201", and a main antenna module 1200 installed at the position facing a lower surface 1B of the measurement object 1 is referred to as "lower main antenna module 1202". The vertical direction is a direction corresponding to the normal direction of the upper surface 1A and the lower surface 1B of the measurement object 1.

The support base 2, the upper main antenna module 1201, and the lower main antenna module 1202 are installed such that a distance $d_1$ between the support base 2 and the upper main antenna module 1201 and a distance $d_2$ between the support base 2 and the lower main antenna module 1202 have different values. In other words, the support base 2, the upper main antenna module 1201, and the lower main antenna module 1202 are installed such that the space between the support base 2 and the upper main antenna module 1201 and the space between the support base 2 and the lower main antenna module 1202 are asymmetric with respect to the support base 2.

Here, only the positional relationship among the support base 2, the upper main antenna module 1201, and the lower main antenna module 1202 will be described, and the detailed functions of the modules illustrated in FIG. 1 will be described below.

In addition, here, the configuration in which the thickness measurement system 10 includes one upper main antenna module 1201 and one lower main antenna module 1202 has been exemplified, but the present invention is not limited thereto, and the thickness measurement system 10 may include any number of upper main antenna modules 1201 and lower main antenna modules 1202 as long as the thickness measurement system includes at least one upper main antenna module 1201 and at least one lower main antenna module 1202.

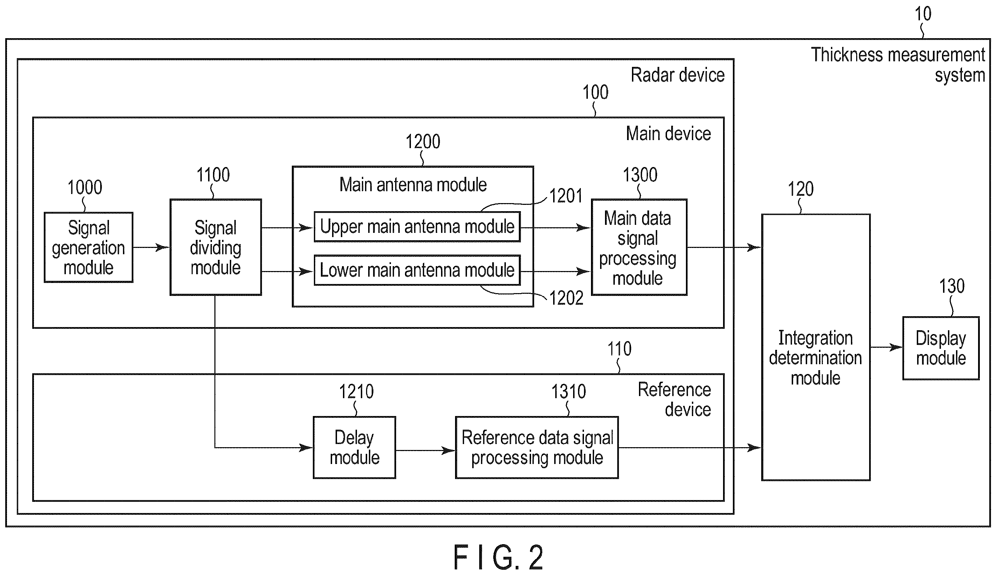

FIG. 2 is a block diagram illustrating a configuration example of the thickness measurement system 10 according to the present arrangement.

The thickness measurement system 10 includes a main device 100, a reference device 110, an integration determination module 120, and a display module 130. Some or all of the functional modules among the main device 100, the reference device 110, and the integration determination module 120 may be referred to as a measurement module.

The main device 100 measures the measurement object 1 using a millimeter wave radar. More specifically, the main device 100 transmits a phase-modulated or frequency-modulated signal to the measurement object 1, receives a signal from the measurement object 1, and performs distance measurement processing to the measurement object 1.

The reference device 110 is a device configured such that a reference signal source of the main device 100 is shared as a reference signal source of the own device, and generates reference data (signal) for reducing frequency drift due to phase distortion or vibration at the time of signal generation from a measurement result of the main device 100.

More specifically, the reference device 110 receives supply of the same signal as the signal transmitted from the main device 100 to the measurement object 1, and adds a delay similar to the delay of the signal caused by the measurement (transmission and reception of signal) of the measurement object 1 in the main device 100. Here, the similar delay is a delay that is substantially the same but is not completely the same. In order to add this delay, the reference device 110 includes a delay module 1210 described below.

The integration determination module 120 measures the thickness of the measurement object 1 based on the outputs of the main device 100 and the reference device 110.

More specifically, first, the integration determination module 120 acquires a difference between the respective outputs, thereby reducing frequency drift (hereinafter, collectively referred to as "noise component") due to phase distortion or vibration at the time of signal generation from the respective outputs. According to this, a noise component can be removed from the output of the main device 100, and the distance from the main device 100 to the measurement object 1 is calculated based on the output in the state where the noise component has been removed. Thereafter, the integration determination module 120 measures the thickness of the measurement object 1 based on the calculated distance to the measurement object 1.

The display module 130 displays the measurement result of the thickness of the measurement object 1 provided by the integration determination module 120. The measurement result displayed on the display module 130 is not limited to the thickness of the measurement object 1, and may be, for example, a displacement amount of the thickness of the measurement object 1 or the presence or absence of displacement. Furthermore, the display module 130 may display the distance from the main device 100 to the measurement object 1.

The main device 100 includes a signal generation module 1000, a signal dividing module 1100, a main antenna module 1200, and a main data signal processing module 1300. As described above, the main antenna module 1200 includes the upper main antenna module 1201 and the lower main antenna module 1202.

The signal generation module 1000 is a common reference signal source for the main device 100 and the reference device 110, and generates a phase-modulated or frequency-modulated signal (transmission signal). Focusing only on the main device 100, the signal generation module 1000 can also be referred to as a reference signal source shared by the upper main antenna module 1201 and the lower main antenna module 1202.

The signal dividing module 1100 divides the signal generated by the signal generation module 1000 into a first signal, a second signal, and a third signal. Among these three signals, the first signal is supplied to the upper main antenna module 1201 and the lower main antenna module 1202, and the second signal and the third signal are supplied to the reference device 110.

Each of the upper main antenna module 1201 and the lower main antenna module 1202 transmits the first signal supplied from the signal dividing module 1100 to the measurement object 1. Further, each of the upper main antenna module 1201 and the lower main antenna module 1202 receives the first signal from the measurement object 1 reflected by the measurement object 1.

The main data signal processing module 1300 executes signal processing using the first signal transmitted and received by the upper main antenna module 1201 and the third signal that is not transmitted and received by the upper main antenna module 1201 and is supplied from the signal dividing module 1100. Specifically, the main data signal processing module 1300 executes signal processing for calculating the distance $d_{1'}$ from the upper main antenna module 1201 to the upper surface 1A of the measurement object 1.

In addition, the main data signal processing module 1300 executes signal processing using the first signal transmitted and received by the lower main antenna module 1202 and the third signal that is not transmitted and received by the lower main antenna module 1202 and is supplied from the signal dividing module 1100. Specifically, the main data signal processing module 1300 executes signal processing for calculating the distance $d_{2'}$ from the lower main antenna module 1202 to the lower surface 1B of the measurement object 1.

Meanwhile, the reference device 110 includes a delay module 1210 and a reference data signal processing module 1310.

The delay module 1210 adds, to the second signal supplied from the signal dividing module 1100 of the main device 100, a delay similar to a signal delay (delay of first signal) caused by measurement (signal transmission and reception) of the measurement object 1 in the main device 100.

The reference data signal processing module 1310 executes signal processing using the second signal to which the delay is added by the delay module 1210 and the third signal to which the delay is not added by the delay module 1210 and which is supplied from the signal dividing module 1100. Specifically, the reference data signal processing module 1310 executes signal processing for calculating a distance from the reference antenna module 1211 to the reference target 3 to be described below.

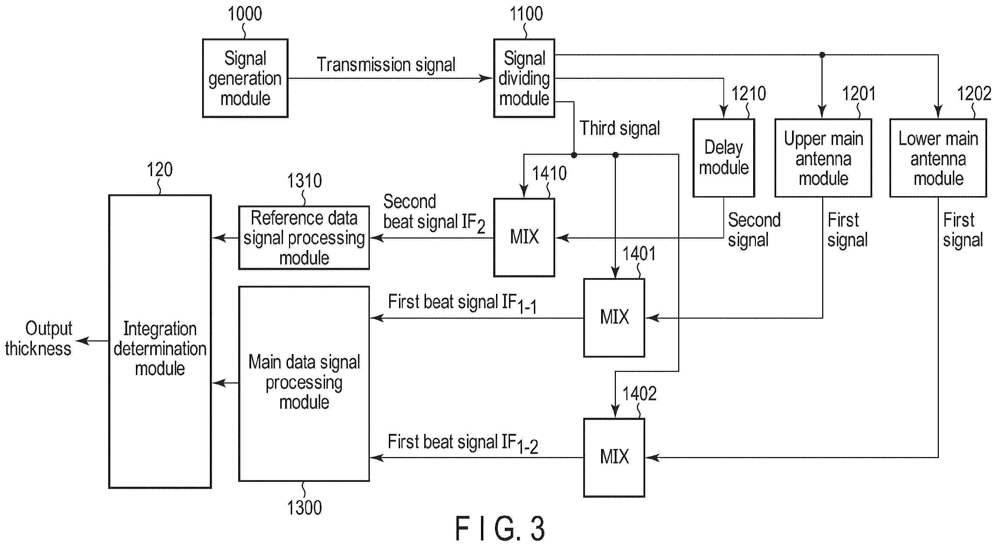

FIG. 3 is a circuit diagram of the radar system in the block diagram of the thickness measurement system 10 illustrated in FIG. 2.

As described above, the signal generated by the signal generation module 1000 and subjected to phase modulation or frequency modulation (transmission signal) is divided into three signals of the first signal, the second signal, and the third signal by the signal dividing module 1100.

The first signal is supplied to each of the upper main antenna module 1201 and the lower main antenna module 1202. The first signal supplied to upper main antenna module 1201 is transmitted from the upper main antenna module 1201 to the upper surface 1A of the measurement object 1, reflected by the upper surface 1A of the measurement object 1, and received by the upper main antenna module 1201.

Similarly, the first signal supplied to lower main antenna module 1202 is transmitted from the lower main antenna module 1202 to the lower surface 1B of the measurement object 1, reflected by the lower surface 1B of the measurement object 1, and received by the lower main antenna module 1202.

Such transmission and reception causes a delay in the first signal.

The second signal is supplied to the delay module 1210. The second signal supplied to the delay module 1210 is delayed by the delay module 1210 to the same extent as the delay of the first signal.

The third signal is a signal which is not transmitted and received by the upper main antenna module 1201 and the lower main antenna module 1202, and is a signal to which a delay is not added by the delay module 1210.

The first signal transmitted and received by the upper main antenna module 1201 and the third signal that is not transmitted and received by the upper main antenna module 1201 are mixed by a mixer 1401.

Similarly, the first signal transmitted and received by the lower main antenna module 1202 and the third signal that is not transmitted and received by the lower main antenna module 1202 are mixed by a mixer 1402.

In addition, the second signal to which the delay is added by the delay module 1210 and the third signal which is a signal to which the delay is not added by the delay module 1210 are mixed by a mixer 1410.

The mixer 1401 extracts a first beat signal $IF_{1-1}$ from the first signal and the third signal transmitted and received by the upper main antenna module 1201. Further, the mixer 1402 extracts a first beat signal $IF_{1-2}$ from the first signal and the third signal transmitted and received by the lower main antenna module 1202. The mixer 1410 extracts a second beat signal $IF_2$ from the second signal and the third signal.

The first beat signals $IF_{1-1}$ and $IF_{1-2}$ are supplied to the main data signal processing module 1300, and the second beat signal $IF_2$ is supplied to the reference data signal processing module 1310.

The main data signal processing module 1300 executes signal processing for deriving a distance $d_1$' from the upper main antenna module 1201 to the upper surface 1A of the measurement object 1 using the first beat signal $IF_{1-1}$.

In addition, the main data signal processing module 1300 executes signal processing for deriving a distance $d_2$' from the lower main antenna module 1202 to the lower surface 1B of the measurement object 1 using the first beat signal $IF_{1-2}$.

Further, the reference data signal processing module 1310 executes signal processing for deriving a distance from the reference antenna module 1211 to the reference target 3 using the second beat signal $IF_2$.

Each processing result is supplied to the integration determination module 120.

The integration determination module 120 removes a noise component commonly observed in both the output of the main data signal processing module 1300 and the output of the reference data signal processing module 1310 from the output of the main data signal processing module 1300, and calculates the distances $d_1$' and $d_2$' to the measurement object 1 based on the output of the main data signal processing module 1300 from which the noise component has been removed.

The integration determination module 120 measures the thickness of the measurement object 1 based on the known distance from the upper main antenna module 1201 to the lower main antenna module 1202 and the calculated distances $d_1$' and $d_2$' to the measurement object 1, and outputs the thickness as a measurement result.

Next, details of the signal processing of the main data signal processing module 1300 and the reference data signal processing module 1310 will be described.

The transmission signal (chirp signal) generated by the signal generation module 1000 can be expressed by the following Equation (1).

$$s(t) = \exp\left(j2\pi\left(f_C t + \frac{S}{2}t^2\right)\right) \qquad \text{Equation (1)}$$

Here, $f_c$ is a start frequency and S is a chirp rate of the chirp signal. The signal dividing module 1100 divides this signal into a main transmission signal (first signal), a reference transmission signal (second signal), and a signal (third signal) used at each of the time of receiving the first signal and the time of receiving the second signal.

A signal that can be received by the main antenna module 1200 that transmits and receives the first signal can be expressed by the following Equation (2), where d is a distance to the measurement object 1.

$$s(t) = A \exp\left(j2\pi\left(f_C(t-\tau) + \frac{S}{2}(t-\tau)^2\right)\right) \qquad \text{Equation (2)}$$

A is a coefficient including a reflection coefficient and distance attenuation. In addition, $\tau$ is a time from transmission of the first signal to reception of the first signal reflected by the measurement object 1, and can be expressed as $\tau=2d/c$. Note that c is the speed of light.

Furthermore, a signal that can be received by the reference antenna module 1211 that transmits and receives the second signal can also be expressed by the same Equation (2), assuming that the distance to the reference target 3 is d.

In Equations (1) and (2), an intermediate frequency (IF) signal (first beat signal, second beat signal) that has been mixed using a frequency mixer (mixer) and passed through a low-pass filter is expressed by the following Equation (3).

$$s(t) = A \exp(j2\pi(S\tau t + f_C\tau)) \qquad \text{Equation (3)}$$

The initial phase of this signal is $2\pi f_c\tau = \Phi_{IF}$ and the frequency is $S\tau = f_{IF}$.

The main data signal processing module 1300 and the reference data signal processing module 1310 receive the IF signal represented by Equation (3), obtain a frequency by performing frequency analysis on this signal, and estimate a distance on the basis of the frequency. A signal obtained by AD-converting the IF signal is expressed by the following Equations (4) to (6).

$$s[n] = A \exp(jn\omega_{IF})\exp(j\Phi_{IF}) \qquad \text{Equation (4)}$$

$\omega_{IF}=2\pi f_{IF}$, $0\leq n<N_S$, $N_S$ is the number of sampling points, and $F_S$ is the sampling frequency.

$$X[k] = DFT\{s[n]\} = A\sum_{n=0}^{N_S-1} s[n]\exp\left(-jn\frac{2\pi}{N_S}k\right)$$
$$= A\exp(j\Phi_{IF})\, P_N\left(\frac{2\pi}{N_S}k-\omega_{IF}\right)$$

$$\text{Equation (5)}$$

$$P_N(\omega) = A\sum_{n=0}^{N_S-1}\exp(-jn\omega) = \frac{\sin(\omega N_S/2)}{\sin(\omega/2)}\exp(-j\omega(N_S-1)/2)$$

$$\text{Equation (6)}$$

The power spectrum of X(k) is maximum when $(2\pi/N_S)k-\omega_{IF}=0$ is satisfied, and when k satisfying this is $k_r$, it can be calculated as following equation, which is called a range bin.

$$k_r = \frac{S\tau}{F_S}N_S$$

$$\text{Equation (7)}$$

The processing using Equations (1) to (7) described above is executed for each of the first signal transmitted and received by the upper main antenna module 1201, the first signal transmitted and received by the lower main antenna module 1202, and the second signal transmitted and received by the reference antenna module 1211.

A range bin $k_1$ indicating the measurement result in the upper main antenna module 1201 is expressed by Equation (8), and a range bin $k_2$ indicating the measurement result in the lower main antenna module 1202 is expressed by Equation (9).

$$k_1 = \frac{S\tau_1}{F_S}N_S$$

$$\text{Equation (8)}$$

$$k_2 = \frac{S\tau_2}{F_S}N_S$$

$$\text{Equation (9)}$$

Note that $d_1$' is a distance from the upper main antenna module 1201 to the upper surface 1A of the measurement object 1, and $d_2$' is a distance from the lower main antenna module 1202 to the lower surface 1B of the measurement object 1.

In addition, $\tau_1$ is a time from when the upper main antenna module 1201 transmits the first signal to when the upper main antenna module receives the first signal reflected by the measurement object 1, and can be expressed as $\tau_1=2d_1'/c$. c is the speed of light. Similarly, $\tau_2$ is a time from when the lower main antenna module 1202 transmits the first signal to when the lower main antenna module receives the first signal reflected by the measurement object 1, and can be expressed as $\tau_2=2d_2'/c$. c is the speed of light.

Here, if the values of $\tau_1$ and $\tau_2$, that is, the values of $d_1$' and $d_2$' are sufficiently different, the range bins $k_1$ and $k_2$ are different. Therefore, it is possible to distinguish and process the measurement result in the upper main antenna module 1201 and the measurement result in the lower main antenna module 1202.

In the thickness measurement system 10 according to the present arrangement, in order to greatly vary the values of $d_1$' and $d_2$', the support base 2, the upper main antenna module 1201, and the lower main antenna module 1202 are installed such that the distance $d_1$ between the support base 2 and the upper main antenna module 1201 and the distance $d_2$ between the support base 2 and the lower main antenna module 1202 have different values.

Note that how much the distance $d_1$ between the support base 2 and the upper main antenna module 1201 and the distance $d_2$ between the support base 2 and the lower main antenna module 1202 should be set to different values depends on the distance resolution of the millimeter wave radar. Since the distance resolution of the millimeter wave radar is determined by c/2B using the bandwidth B and the light speed c, for example, in the case of using a millimeter wave radar of 3.5 GHz bandwidth in the 79 GHz band, it is desirable to set a value such that the distance $d_{1'}$ between the upper main antenna module 1201 and the upper surface 1A of the measurement object 1 and the distance $d_{2'}$ between the lower main antenna module 1202 and the lower surface 1B of the measurement object 1 are different by 4 cm or more.

As described above, the processing of the main data signal processing module 1300 and the reference data signal processing module 1310 can be expressed as processing of obtaining a range bin by performing fast Fourier transform (FFT) after performing the AD conversion on the input IF signal and acquiring phase information in the obtained range bin.

The phase information obtained by performing FFT in the main data signal processing module 1300 and the phase information obtained by performing FFT in the reference data signal processing module 1310 include substantially the same noise component. The integration determination module 120 removes a noise component from the phase information of the main data signal processing module 1300 by subtracting the phase information of the reference data signal processing module 1310 from the phase information of the main data signal processing module 1300, and acquires phase information in a state where the noise component has been removed. Integration determination module 120 calculates a distance d from main device 100 to measurement object 1 based on the acquired phase information.

Hereinafter, effects of the thickness measurement system 10 according to the present arrangement will be described using a comparative example. Note that the comparative example is for describing a part of the effects that can be obtained by the thickness measurement system 10 according to the present arrangement, and does not exclude the configuration and effect common between the present arrangement and the comparative example from the scope of the present invention.

As the comparative example, it is assumed that the support base 2, the upper main antenna module 1201, and the lower main antenna module 1202 are installed such that the distance $d_1$ between the support base 2 and the upper main antenna module 1201 and the distance $d_2$ between the support base 2 and the lower main antenna module 1202 have the same value.

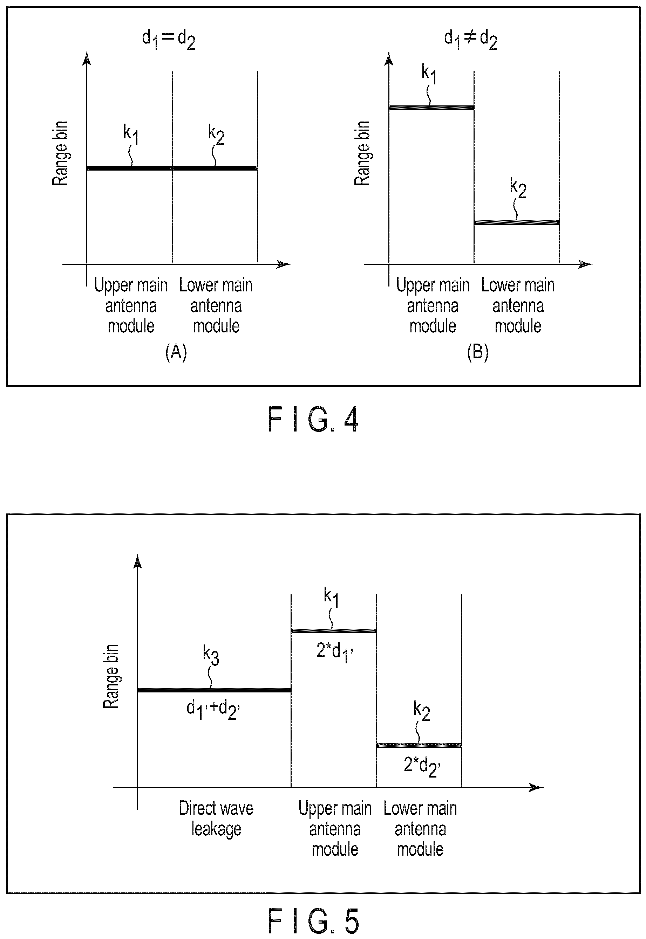

In this case, the time from the transmission of the first signal to the reception of the first signal by the upper main antenna module 1201 and the lower main antenna module 1202 is the same (that is, distances at which the first signals are transmitted from the main antenna modules 1201 and 1202 to the time at which the first signals are reflected by the measurement object 1 and received by the main antenna modules 1201 and 1202 are also the same), and as illustrated in FIG. 4A, the range bin $k_1$ indicating the measurement result in the upper main antenna module 1201 and the range bin $k_2$ indicating the measurement result in the lower main antenna module 1202 coincide with each other.

If the range bins $k_1$ and $k_2$ coincide with each other, there is a problem that the measurement result in the upper main antenna module 1201 and the measurement result in the lower main antenna module 1202 cannot be discriminated from each other, and the thickness of the measurement object 1 cannot be measured.

On the other hand, in the thickness measurement system 10 according to the present arrangement, the support base 2, the upper main antenna module 1201, and the lower main antenna module 1202 are installed such that the distance $d_1$ between the support base 2 and the upper main antenna module 1201 and the distance $d_2$ between the support base 2 and the lower main antenna module 1202 have different values.

Accordingly, the time from the transmission of the first signal to the reception of the first signal by the upper main antenna module 1201 and the lower main antenna module 1202 is also different (that is, distance by which the first signal is transmitted from each of the main antenna modules 1201 and 1202, reflected by the measurement object 1, and received by each of the main antenna modules 1201 and 1202 is also different), and as illustrated in FIG. 4B, it is possible to prevent the range bin $k_1$ indicating the measurement result in the upper main antenna module 1201 and the range bin $k_2$ indicating the measurement result in the lower main antenna module 1202 from coinciding with each other. That is, the measurement result in the upper main antenna module 1201 and the measurement result in the lower main antenna module 1202 can be discriminated from each other, and the above problem can be solved.

When two main antenna modules 1200 are installed so as to face each other as in the thickness measurement system 10 according to the present arrangement, the first signal transmitted by one main antenna module 1200 may be received by the other main antenna module 1200 without being reflected by the measurement object 1. Hereinafter, the fact that the first signal transmitted by one main antenna module 1200 is received by the other main antenna module 1200 is referred to as "direct wave leakage", and the first signal received by the other main antenna module 1200 due to the direct wave leakage is referred to as "leakage signal".

The leakage signal (first signal) received by the other main antenna module 1200 due to the direct wave leakage is also subjected to the processing using Equations (1) to (7) to obtain a range bin $k_3$ corresponding to the direct wave leakage. As described above, since the range bin corresponds to the distance at which the first signal has propagated, the range bin $k_3$ corresponding to the direct wave leakage has a value corresponding to "$d_{1'}+d_{2'}$" without considering the distance corresponding to the thickness of the measurement object 1.

On the other hand, the range bin $k_1$ corresponding to the upper main antenna module 1201 has a value corresponding to "$2*d_{1'}$", and the range bin $k_2$ corresponding to the lower main antenna module 1202 has a value corresponding to "$2*d_2$''.

In the thickness measurement system 10 according to the present arrangement, since the support base 2, the upper main antenna module 1201, and the lower main antenna module 1202 are installed such that the distance $d_1$ between the support base 2 and the upper main antenna module 1201 and the distance $d_2$ between the support base 2 and the lower main antenna module 1202 have different values, "$d_1+d_2$", "$2*d_1$", and "$2*d_2$" all have different values.

That is, according to the thickness measurement system 10 according to the present arrangement, as illustrated in FIG. 5, it is possible to prevent the range bin $k_1$ indicating the measurement result in the upper main antenna module 1201, the range bin $k_2$ indicating the measurement result in the lower main antenna module 1202, and the range bin $k_3$ corresponding to the direct wave leakage from coinciding with each other, and to discriminate three of the measurement result in the upper main antenna module 1201, the measurement result in the lower main antenna module 1202, and the direct wave leakage.

In the present arrangement described above, the configuration in which the thickness measurement system 10 includes the reference device 110 has been described, but the reference device 110 may be omitted from the viewpoint of the positional relationship among the support base 2, the upper main antenna module 1201, and the lower main antenna module 1202. In this case, although it is not possible to remove the noise component described above, it is possible to prevent the range bin $k_1$ indicating the measurement result in the upper main antenna module 1201 and the range bin $k_2$ indicating the measurement result in the lower main antenna module 1202 from coinciding with each other.

It is also possible to prevent the range bin $k_1$ indicating the measurement result in the upper main antenna module 1201, the range bin $k_2$ indicating the measurement result in the lower main antenna module 1202, and the range bin $k_3$ corresponding to the direct wave leakage from coinciding with each other.

(Second Arrangement)

Next, a second arrangement will be described. A thickness measurement system 10 according to the second arrangement is different from that of the first arrangement in that the thickness measurement system includes an adjustment mechanism capable of adjusting a distance $d_1$ between the support base 2 and the upper main antenna module 1201 and a distance $d_2$ between the support base 2 and the lower main antenna module 1202. The thickness measurement system 10 according to the second arrangement is different from that of the first arrangement in that a main data signal processing module 1300 included in a main device 100 includes a range bin analysis module.

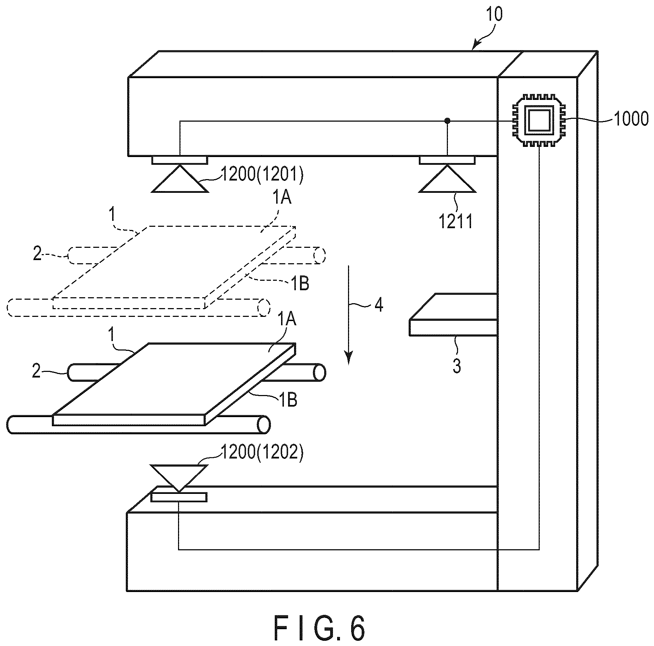

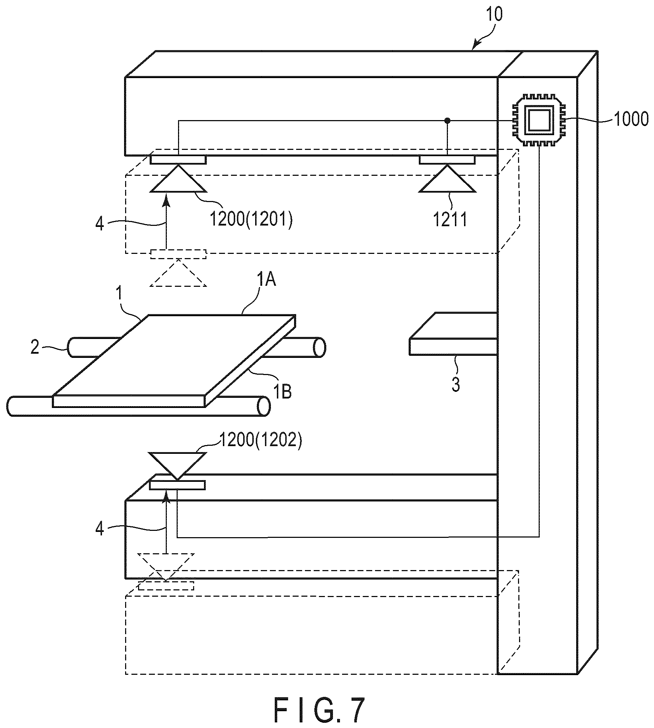

FIGS. 6 and 7 are diagrams illustrating a configuration example of the thickness measurement system 10 according to the second arrangement.

The thickness measurement system 10 further includes an adjustment mechanism 4 capable of moving the support base 2 vertically as illustrated in FIG. 6, in addition to the support base 2, the reference target 3, the signal generation module 1000, the upper main antenna module 1201 and the lower main antenna module 1202 installed so as to face each other vertically across the support base 2, and the reference antenna module 1211. When the support base 2 is moved vertically by the adjustment mechanism 4, the distance $d_1$ between the support base 2 and the upper main antenna module 1201 and the distance $d_2$ between the support base 2 and the lower main antenna module 1202 can be adjusted (changed).

Alternatively, as illustrated in FIG. 7, the thickness measurement system 10 may include the adjustment mechanism 4 capable of vertically moving at least one of the upper main antenna module 1201 and the lower main antenna module 1202. In this case, at least one of the upper main antenna module 1201 and the lower main antenna module 1202 is moved vertically by the adjustment mechanism 4, so that the distance $d_1$ between the support base 2 and the upper main antenna module 1201 and the distance $d_2$ between the support base 2 and the lower main antenna module 1202 can be adjusted (changed).

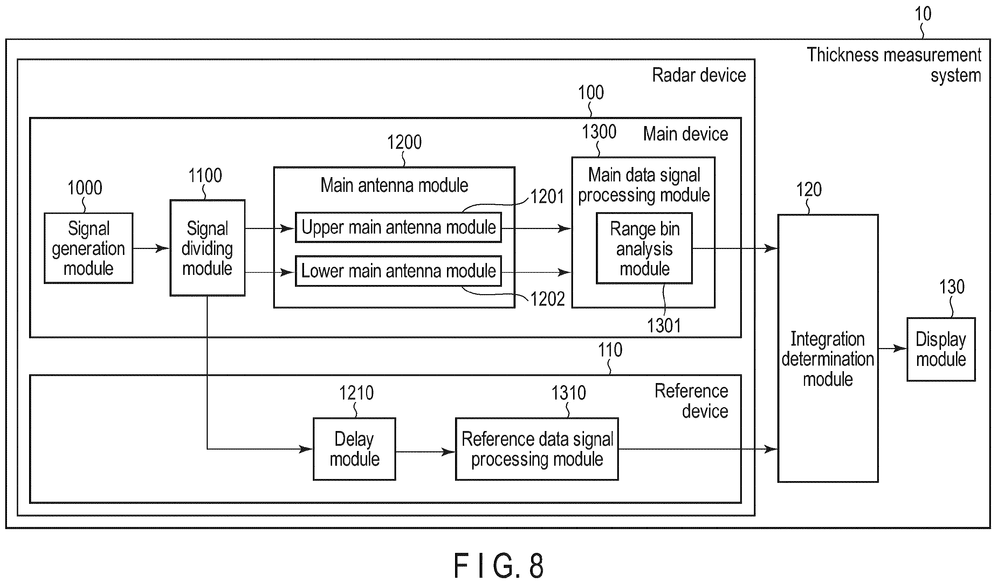

FIG. 8 is a block diagram illustrating a configuration example of the thickness measurement system 10 according to the second arrangement.

As illustrated in FIG. 8, the main data signal processing module 1300 included in the main device 100 includes a range bin analysis module 1301.

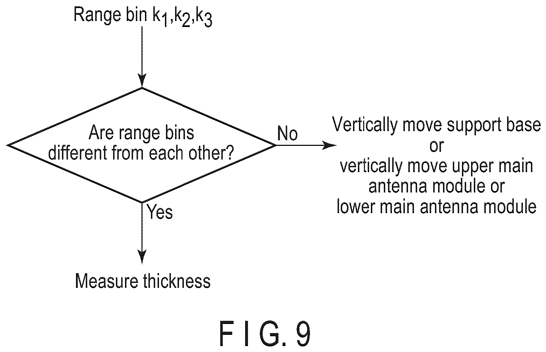

After calculating the range bin $k_1$ indicating the measurement result in the upper main antenna module 1201, the range bin $k_2$ indicating the measurement result in the lower main antenna module 1202, and the range bin $k_3$ corresponding to the direct wave leakage, the range bin analysis module 1301 determines (analyzes) whether the range bins $k_1$, $k_2$, and $k_3$ are different from each other as illustrated in FIG. 9.

Note that the case where the range bin analysis module 1301 determines whether the range bins $k_1$, $k_2$, and $k_3$ are different from each other has been described here. However, if the direct wave leakage is not considered, the range bin analysis module 1301 may determine whether the range bins $k_1$ and $k_2$ are different from each other.

As a result of the determination, when it is determined that the range bins $k_1$, $k_2$, and $k_3$ are not different from each other (No in FIG. 9), the thickness measurement system 10 automatically moves the support base 2 vertically by the adjustment mechanism 4 or moves at least one of the upper main antenna module 1201 and the lower main antenna module 1202 vertically by the adjustment mechanism 4 so that the range bins $k_1$, $k_2$, and $k_3$ have different values from each other.

Instead of automatically moving the support base 2 vertically by the adjustment mechanism 4 or moving at least one of the upper main antenna module 1201 and the lower main antenna module 1202 vertically by the adjustment mechanism 4, the thickness measurement system 10 may output an instruction to urge the operator to vertically move the support base 2 using the adjustment mechanism 4 or vertically move at least one of the upper main antenna module 1201 and the lower main antenna module 1202 using the adjustment mechanism 4. In this case, an operator who operates the thickness measurement system 10 manually operates the adjustment mechanism 4 according to the above instruction to vertically move the support base 2 or to vertically move at least one of the upper main antenna module 1201 and the lower main antenna module 1202.

On the other hand, when it is determined that the range bins $k_1$, $k_2$, and $k_3$ are different from each other as a result of the determination (Yes in FIG. 9), the thickness measurement system 10 executes processing for calculating the distance $d_{1'}$ from the upper main antenna module 1201 to the upper surface 1A of the measurement object 1 and the distance $d_{2'}$ from the lower main antenna module 1202 to the lower surface 1B of the measurement object 1, and measures the thickness of the measurement object 1.

The adjustment mechanism 4 is preferably used to adjust the distance $d_1$ between the support base 2 and the upper main antenna module 1201 and the distance $d_2$ between the support base 2 and the lower main antenna module 1202 at the time of test measurement before measuring the thickness of the measurement object 1.

Even when the support base 2, the upper main antenna module 1201, and the lower main antenna module 1202 are installed such that the distance $d_1$ between the support base 2 and the upper main antenna module 1201 and the distance $d_2$ between the support base 2 and the lower main antenna module 1202 have different values as in the thickness measurement system 10 according to the first arrangement, the distance $d_{1'}$ from the upper main antenna module 1201 to the upper surface 1A of the measurement object 1 and the distance $d_{2'}$ from the lower main antenna module 1202 to the lower surface 1B of the measurement object 1 may coincide depending on the thickness of the measurement object 1. In this case, as described above, since the range bin $k_1$ indicating the measurement result in the upper main antenna module 1201 and the range bin $k_2$ indicating the measurement result in the lower main antenna module 1202 coincide with each other, there is a possibility that the thickness of the measurement object 1 cannot be measured.

On the other hand, in the thickness measurement system 10 according to the present arrangement, since the processing by the range bin analysis module 1301 is performed once as the test measurement before the thickness of the measurement object 1 is measured, the position of the support base 2 or the positions of the upper main antenna module 1201 and the lower main antenna module 1202 can be adjusted such that the distance $d_{1'}$ from the upper main antenna module 1201 to the upper surface 1A of the measurement object 1 does not coincide with the distance $d_{2'}$ from the lower main antenna module 1202 to the lower surface 1B of the measurement object 1.

That is, in the thickness measurement system 10 according to the first arrangement, the case has been described in which the support base 2, the upper main antenna module 1201, and the lower main antenna module 1202 are installed so that the distance $d_1$ between the support base 2 and the upper main antenna module 1201 and the distance $d_2$ between the support base 2 and the lower main antenna module 1202 have different values, thereby the thickness of the measurement object 1 can be measured without coinciding the distance $d_{1'}$ from the upper main antenna module 1201 to the upper surface 1A of the measurement object 1 with the distance $d_{2'}$ from the lower main antenna module 1202 to the lower surface 1B of the measurement object 1. However, in the thickness measurement system 10 according to the present arrangement, since the position of the support base 2 or the positions of the upper main antenna module 1201 and the lower main antenna module 1202 are adjusted so that the distance $d_{1'}$ from the upper main antenna module 1201 to the upper surface 1A of the measurement object 1 does not coincide with the distance $d_{2'}$ from the lower main antenna module 1202 to the lower surface 1B of the measurement object 1, the thickness of the measurement object 1 can be measured more reliably.

Note that the thickness measurement system 10 according to the present arrangement may further include an adjustment mechanism capable of moving the reference target 3 or the reference antenna module 1211 vertically when the range bin analysis module 1301 determines that the range bins $k_1$, $k_2$, and $k_3$ are not different from each other (No in FIG. 9).

According to at least one arrangement described above, it is possible to provide a thickness measurement system capable of discriminating between a measurement result of an upper millimeter wave radar and a measurement result of a lower millimeter wave radar.

While certain arrangements have been described, these arrangements have been presented by way of example only, and are not intended to limit the scope of the claims. Indeed, the thickness measurement system described herein may be embodied in a variety of other forms; furthermore, various omissions, substitutions and changes in the form of the thickness measurement system described herein may be made.

The arrangements as described above include clauses below.

Clause 1

A thickness measurement system characterized by comprising:

a support base on which a measurement object is placed;
a first antenna module;
a second antenna module disposed opposite to the first antenna module in a first direction across the support base; and
a signal generation module shared by the first antenna module and the second antenna module, characterized in that both the first antenna module and the second antenna module are configured to transmit a first signal based on a signal from the signal generation module to the measurement object and receive the first signal reflected by the measurement object, and
the support base, the first antenna module, and the second antenna module are installed such that a distance along the first direction between the support base and the first antenna module is different from a distance along the first direction between the support base and the second antenna module.

Clause 2

The thickness measurement system according to Clause 1, characterized by further comprising a first adjustment mechanism capable of moving the support base or at least one of the first antenna module and the second antenna module along the first direction.

Clause 3

The thickness measurement system according to Clause 2, characterized by further comprising a determination module configured to determine whether a first measurement result, which is a result of signal processing using the first signal transmitted and received by the first antenna module and corresponds to a distance from the first antenna module to the measurement object, and a second measurement result, which is a result of signal processing using the first signal transmitted and received by the second antenna module and corresponds to a distance from the second antenna module to the measurement object, are different from each other, characterized in that
the first adjustment mechanism is configured to move the support base along the first direction or move at least one of the first antenna module and the second antenna module along the first direction in a case where the first measurement result and the second measurement result are not different from each other.

Clause 4

The thickness measurement system according to Clause 3, characterized in that

the determination module is further configured to determine whether the first measurement result, the second measurement result, and a third measurement result corresponding to a result of signal processing using the first signal transmitted from one of the first antenna module and the second antenna module and received by the other of the first antenna module and the second antenna module are different from each other, and
in a case where the first measurement result, the second measurement result, and the third measurement result are not different from each other, the first adjustment mechanism is configured to move the support base along the first direction or move at least one of the first antenna module and the second antenna module along the first direction.

Clause 5

The thickness measurement system according to Clause 4, characterized by further comprising:

a reference target different from the measurement object;
a reference antenna module configured to transmit a second signal based on a signal from the signal generation module to the reference target and receive the second signal reflected by the reference target; and
a second adjustment mechanism capable of moving the reference target or the reference antenna module along the first direction, characterized in that
the second adjustment mechanism is configured to move the reference target or the reference antenna module along the first direction in a case where the first measurement result, the second measurement result, and the third measurement result are not different from each other.

Clause 6

The thickness measurement system according to Clause 1, characterized by further comprising a measurement module configured to:

execute signal processing using the first signal transmitted and received by the first antenna module and measure a first distance from the first antenna module to the measurement object,
execute signal processing using the first signal transmitted and received by the second antenna module and measures a second distance from the second antenna module to the measurement object, and
measure a thickness of the measurement object based on the first distance and the second distance.

**Claims**

1. A thickness measurement system (10) **characterized by** comprising:

a support base (2) on which a measurement object (1) is placed;
a first antenna module (1201);
a second antenna module (1202) disposed opposite to the first antenna module (1201) in a first direction across the support base (2); and
a signal generation module (1000) shared by the first antenna module (1201) and the second antenna module (1202), **characterized in that**
both the first antenna module (1201) and the second antenna module (1202) are configured to transmit a first signal based on a signal from the signal generation module (1000) to the measurement object (1) and receive the first signal reflected by the measurement object (1), and
the support base (2), the first antenna module (1201), and the second antenna module (1202) are installed such that a distance ($d_1$) along the first direction between the support base (2) and the first antenna module (1201) is different from a distance ($d_2$) along the first direction between the support base (2) and the second antenna module (1202).

2. The thickness measurement system (10) according to claim 1, **characterized by** further comprising a first adjustment mechanism (4) capable of moving the support base (2) or at least one of the first antenna module (1201) and the second antenna module (1202) along the first direction.

3. The thickness measurement system (10) according to claim 2, **characterized by** further comprising a determination module (120) configured to determine whether a first measurement result ($k_1$), which is a result of signal processing using the first signal transmitted and received by the first antenna module (1201) and corresponds to a distance ($d_{1'}$) from the first antenna module (1201) to the measurement object (1), and a second measurement result ($k_2$), which is a result of signal processing using the first signal transmitted and received by the second antenna module (1202) and corresponds to a distance ($d_{2'}$) from the second antenna module (1202) to the measurement object (1), are different from each other, **characterized in that**
the first adjustment mechanism (4) is configured to move the support base (2) along the first direction or move at least one of the first antenna module (1201) and the second antenna module (1202) along the first direction in a case where the first measurement result ($k_1$) and the second measurement result ($k_2$) are not different from each other.

4. The thickness measurement system (10) according to claim 3, **characterized in that**

the determination module (120) is further configured to determine whether the first measurement result ($k_1$), the second measurement result ($k_2$), and a third measurement result ($k_3$) corresponding to a result of signal processing using the first signal transmitted from one of the first antenna module (1201) and the second antenna module (1202) and received by the other of the first antenna module (1201) and the second antenna module (1202) are different from each other, and
in a case where the first measurement result ($k_1$), the second measurement result ($k_2$), and the third measurement result ($k_3$) are not different from each other, the first adjustment mechanism (4) is configured to move the support base (2) along the first direction or move at least one of the first antenna module (1201) and the second antenna module (1202) along the first direction.

5. The thickness measurement system (10) according to claim 4, **characterized by** further comprising:

a reference target (3) different from the measurement object (1);
a reference antenna module (1211) configured to transmit a second signal based on a signal from the signal generation module (1000) to the reference target (3) and receive the second signal reflected by the reference target (3); and
a second adjustment mechanism capable of moving the reference target (3) or the reference antenna module (1211) along the first direction, **characterized in that**
the second adjustment mechanism is configured to move the reference target (3) or the reference antenna module (1211) along the first direction in a case where the first measurement result ($k_1$), the second measurement result ($k_2$), and the third measurement result ($k_3$) are not different from each other.

6. The thickness measurement system (10) according to claim 1, **characterized by** further comprising a measurement module configured to:

execute signal processing using the first signal transmitted and received by the first antenna module (1201) and measure a first distance ($d_{1'}$) from the first antenna module (1201) to the measurement object (1),
execute signal processing using the first signal transmitted and received by the second antenna module (1202) and measures a second distance ($d_{2'}$) from the second antenna module (1202) to the measurement object (1), and
measure a thickness of the measurement object (1) based on the first distance ($d_{1'}$) and the second distance ($d_{2'}$).

FIG. 1

FIG. 2

FIG. 3

FIG. 4

FIG. 5

F I G. 6

F I G. 7

10 Thickness measurement system

100 Radar device

Main device

1000 Signal generation module

1100 Signal dividing module

1200 Main antenna module
1201 Upper main antenna module
1202 Lower main antenna module

1300 Main data signal processing module
1301 Range bin analysis module

110 Reference device
1210 Delay module
1310 Reference data signal processing module

120 Integration determination module

130 Display module

F I G. 8

Range bin $k_1, k_2, k_3$

Are range bins different from each other?

No → Vertically move support base
or
vertically move upper main antenna module or
lower main antenna module

Yes

Measure thickness

# F I G. 9

Europäisches
Patentamt

European
Patent Office

Office européen
des brevets

# EUROPEAN SEARCH REPORT

**Application Number**

**EP 25 18 8665**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUCKERMANN NIKLAS ET AL: "Metal Sheet Thickness Measurement using Dielectric Waveguides with Millimeter Wave Radar", 2024 INTERNATIONAL CONFERENCE ON ELECTROMAGNETICS IN ADVANCED APPLICATIONS (ICEAA), IEEE, 2 September 2024 (2024-09-02), pages 503-508, XP034723371, DOI: 10.1109/ICEAA61917.2024.10701689 [retrieved on 2024-10-08] * abstract; figures 1 - 3 * * chapter II * * chapter III * | 1-6 | INV. G01S7/40 G01S7/41 G01S13/34 G01S13/88 G01B15/02 |
| L | MUCKERMANN NIKLAS ET AL: "High Accuracy Thickness Measurements of Conducting Material with Single FMCW Radar Sensor", 2022 14TH GERMAN MICROWAVE CONFERENCE (GEMIC), IMA, 16 May 2022 (2022-05-16), pages 53-56, XP034130445, [retrieved on 2022-06-01] * abstract * * chapter II * | | |
| | ----- | | TECHNICAL FIELDS SEARCHED (IPC) |
| | | | G01S G01B |

The present search report has been drawn up for all claims

| Place of search | Date of completion of the search | Examiner |
|---|---|---|
| Munich | 12 November 2025 | Knoll, Bernhard |

EPO FORM 1503 03.82 (P4C01)